# EUROPEAN PATENT SPECIFICATION

(11) **EP 2 910 866 B1**
(45) Date of publication and mention of the grant of the patent: **09.11.2022**
(21) Application number: 14156602.6
(22) Date of filing: 25.02.2014
(51) Int. Cl.: F24F 12/00

(54) **System and method for freezing protection**
System und Verfahren für Frostschutz
Système et procédé pour la protection contre le gel

(43) Date of publication of application: 26.08.2015
(73) Proprietor: FläktGroup Sweden AB, 551 84 Jönköping (SE)
(72) Inventor: Sundelin, Peter, 02400 Kyrkslätt (FI); Yliollitervo, Jouko, 01390 Vantaa (FI)
(74) Representative: Hård, John Martin

(56) References cited:
- EP-A1- 2 487 430
- DE-A1- 4 408 087
- DE-A1-102009 011 747

## Description

### Field of invention

Present invention relates to run around coil energy recovery systems (RAR) within air handling applications. Especially, the invention concerns high efficiency run around coil energy recovery systems (HE-RAR), where freezing protection becomes an issue due to the high efficiency of the coils in the system, which is not a big issue in "normal" RAR systems, which has rather low energy recovery. A system and method for freezing protection and continuous optimization of energy recovery is disclosed by the invention.

### Background of the invention

Run around coil energy recovery system (RAR) is a well known component in the field of heating, ventilating and air-conditioning (HVAC). The RAR is used to recover energy from the exhaust air and transmit the energy to the supply air in connection to an air handling unit (AHU). The RAR is often used when the exhaust and supply airflow must be kept entirely separated, for example applications with strict hygiene requirements, such as medical applications, where any mass transfer of bacteria, contaminations, humidity and odours must be avoided. The energy is transferred from one air flow to the other indirectly, via air to liquid energy exchangers, typically a coil, and a liquid medium, which is pumped around in a circuit between the energy exchangers, placed in the exhaust and supply air side.

When the outside temperature decreases, the risk of decreasing temperature and freezing of the liquid exists. This is generally prevented by adding anti freeze medium into the energy recovering liquid, which lowering the freezing point of the liquid. A common liquid is so called brine which is a mixture of water and for example ethylene glycol, often with 30% anti freeze medium as a rule of thumb. However, at extreme conditions (-20°C), this is not sufficient. To prevent freezing of the liquid one option is to increase the part of anti freeze medium, but this is degrading the energy exchanging performance of the liquid and the efficiency of the system, and the required performance is no longer reached. Also other issues, such as the activities and the number of human beings in the buildings, affect the humidity of the air in the building and therefore the exhaust air has higher humidity than incoming air. When the exhaust air is cooled down by the RAR system condensation may occur in the exhaust air coil, and below 0 °C the condensate will freeze and block the air passage through the exhaust air energy exchanger, which also is an issue in these systems. The anti freeze liquid is only protecting the liquid from freezing but not the coil/coils in the exhaust air from freezing by means of condensed water. As a consequence of adding anti freeze medium into the liquid, ordinary RAR systems have very low energy efficiency - typically an energy recovery around 40-50% is achieved. Improvement of these systems has been obtained by using high efficiency coil together with feeding additional energy into the liquid system as described by the applicants patent EP 0706630 B1. Although improved, the efficiency remains rather limited, and therefore freezing of the liquid or of the exhaust air energy exchanger is not very critical in prior art solutions and can normally be handled by adjusting the liquid flow. In case of freezing one alternative used in prior art solutions is to bypass the liquid flow of the only exhaust air coil, but this of course decrease the total energy efficiency of the system with poor control of the energy recovery during such a period of defrosting. For prior art low efficient RAR, freezing protection can also be handled by bypassing the liquid over the supply air coil or by controlling the liquid flow. This simple freezing protection is relatively unstable and cannot be used for HE-RAR systems with high energy efficiency.

One solution with bypassing the liquid over a first coil of two in the supply air stream is presented in EP 2487430 A1. The document discloses a system according to the preamble of claim 1. This solution is based on liquid bypassing of the first coil in the supply air side when freezing occurs in the first coil of the exhaust air side, in order to raise the liquid temperature before entering the coils of the exhaust air side and thereby prevent ice formation. The problem with this is that this doesn't work at low temperatures as in HE-RAR-systems because the liquid in the coil that is bypassed is not circulating and also meets very low temperatures of outdoor air and consequently will either freeze or partly freeze depending on the amount of anti freeze medium in the liquid. So there is a risk that the bypassed coil bursts due to frost in the liquid or that the system is impossible to start again because of that the liquid is viscous.

For applications where the air flow can be reduced or stopped one method is simply to reduce or stop the supply air flow.

These simple freezing protection methods are limiting the use of these systems to buildings where only low humidity occurs.

With higher demands of saving energy and the development of standards regarding energy savings, high efficiency run around coil systems (HE-RAR) are required and therefore a more flexible and energy effective freezing protection is needed. Such systems shall be able to operate in cold climate such as in Scandinavia where freezing protection is an issue and for applications where freezing protection by reducing air flows is not an option.

### Disclosure of the invention

It is an object of the present invention to provide a system and a method for freezing protection and continuous optimization of energy recovery during even during freezing protection, to gain maximum performance of the HE-RAR system.

The object of the invention is solved by a system according to claim 1 and a method according to claim 15.

In the first aspect of the invention the object is solved by that the system is arranged with two sets of coils, one first set of coils in the exhaust air and one second set of coils in the supply air stream, and to use multiple split coils - at least two coils - in the second set of coils (supply air) and that the system is arranged to control the liquid flow to each of these coils separately. The use of at least two coils in the supply air set of coils provides the possibility to at least partially bypass one of the coils in a controlled manner and always keep one coil not bypassed, by that at least one coil is arranged to be at least partially bypassed and the other is arranged to not be bypassed. This is preferably performed by one or more electrically controllable two-way valves for partial or full bypass (0-100%) of one or more coils, depending on the number of coils in the set. The number of coils can vary from two or more coils in the supply set of coils. Because of that the bypass is controlled and that the liquid is not bypassing the first coil in the supply air flow direction, the energy efficiency remains reasonable even during freezing protection operation. Depending on air and fluid temperature measurements and fluid flow measurements in different positions of system it is possible to control and prevent freezing both on the air side and the liquid side. Together with that the system also has the possibility to control the total fluid flow circulation by a pump, the flexibility of the freezing protection sequence is better than prior art solutions.

According to a preferred embodiment of the invention each coil in the second set of coils is individually optimized for its purpose. This means that depending on the design criteria, certain demands on the system control etc., each coil in the second set of coils is designed for the best functionality in respect of freezing protection and for continuous energy optimization during this operation, which means that the coils in the second set of coils (supply air) can be individually designed with different set up of piping, fin spacing, dimensions - for example width, material, etc. This gives a better total energy recovery with better and more flexible control possibilities than in prior art systems and the total energy recovery is better over a wider range of running conditions.

According to a further preferred embodiment the system is arranged with multiple split coils also in the exhaust air and arranged to control the liquid flow to each coil separately.

The use of at least two coils in the exhaust air set of coils provides the possibility to at least partially bypass at least one of the coils in the exhaust set of coils in a controlled manner. This is preferably performed by one or more electrically controllable two-way valves for partial or full bypass of one or more coils, depending on the number of coils in the set. When both the exhaust and supply air side are equipped with a set up of at least two coils per group, the flexibility and the control combinations serves a better way of meeting a great number of different running conditions, especially at lower air temperature area, with maintained and high efficiency. This high grade of flexibility is not at hand in known HE-RAR systems. Another advantage with two or more coils in the exhaust air stream is that when the exhaust air is humid. As air being cooled in the coil first meeting the humid exhaust air, condensation of at least a part or, depending on the situation and the control of the system, the most of the humidity will take place. This means that condense water will be taken out from the exhaust air which means that the following coil/coils can operate down to lower temperatures without frost formation problems. By controlling the humidity in the exhaust air one can gain high energy recovery despite humid air and down to lower temperatures compared to prior art solutions.

According to the invention at least one coil in the exhaust set of coils is arranged not to be bypassed on the fluid side. Preferably the coldest coil is never bypassed in the heating case. The combination with a controlled fluid and the possibility to bypass one coil (0-100%) and keep the coldest coil still in operation, for example in low temperature running conditions, the system is still operating with at least limited efficiency. Older systems according to prior art solutions will in low temperature shut off the exhaust side for freezing protection with no energy recovery at all.

In the same way as in one of the above described embodiments also each coil in the first set of coils - in the exhaust air stream - is individually optimized for its purpose. As described before, this means that depending on the design criteria, certain demands on the system control etc., each coil in the first set of coils is designed for the best functionality in respect of freezing protection and for continuous energy optimization during this operation, which means that the coils can be designed with different set up of piping, fin spacing, dimensions - for example width, material, etc. An even greater flexibility and covering of a wide range of running conditions is achieved with individually designed coils also in the exhaust air stream. Prior art HE-RAR systems in connection to air handling units does not provide this flexibility and possibility of precise optimization for keeping good energy recovery and at the same time protect the system from freezing on the air side and liquid side, in a wide range of running conditions.

For certain conditions there is a need of a partial up to full (0-100%) bypass of the complete first set of coils - the coils in the exhaust air stream - and therefore one preferred embodiment of the invention comprises a bypass circuit, bypassing the first set of coils. Preferably this bypass is controlled by an electrically controllable multi-way valve, for example a 3-way valve.

According to a preferred embodiment of the invention the coils in each set of coils are separated with a space. At least some of the coils have this space before, between or after or space both before and after each coil. The advantage with this is that to control the system and the method for freezing protection and continuous optimization of the HE-RAR system, there is a need of a number of sensors, for example air temperature sensors and air humidity sensors etc. These can be arranged in these spaces and of course the need of a space is driven by where to put the sensors. Another advantage or even a demand for some markets is the need of access to the coil surfaces for cleaning.

According to a preferred embodiment at least one of said spaces comprises an air temperature sensor. The invention does not exactly pin point one or several positions of temperature sensor/sensors because the need depend on the control sequences specified for a specific system and also on the number of coils in each set up of coils. But for example is the exhaust air temperature in one or several positions of importance, because the detection of possible freezing temperature is one of the inputs to initiate a controlled freezing protection operation of the system. Also measurement of outdoor air temperature and of course supply air temperature can be of importance, both for freezing protection and for controlling and optimizing the energy recovery and supply air temperature.

According to a preferred embodiment at least one of said spaces comprises an air humidity sensor. As for the temperature sensor the exact pin point of one position is not at hand because that would limit the scope of control possibilities. For sure one position would be to detect the exhaust air humidity in at least one position, for example after the coldest coil to control that freezing will not occur on the air side or on the liquid side of that coil. If set point is reached regarding humidity, the control of system initiates one or several freezing protection functions. When the exhaust set of coils comprises two or more coils, one option is to measure the humidity before the coil which first meet the exhaust air flow and let this coil condensate some of the humidity. In that case also a humidity sensor can be placed after this coil or before the last coil (coldest) in the exhaust air flow direction, to control the operation of this coil for maximum energy recovery without freezing risk.

According to one embodiment at least one of said spaces comprises a differential air pressure sensor, preferably two spaces, to check if frost formation occurs in a coil. If icing occurs in the coil the pressure drop over the coil increases and this is detected by the pressure sensor/sensors. The need of this sensor might though be limited or as an extra safety function, but can be an extra function to use together with other control options for freezing protection.

Above described options for initializing frost protection through detection on the exhaust air side must also be complemented with control and detection of the status on the liquid side. In a preferred embodiment of the invention a first fluid temperature sensor is arranged in the energy recovery circuit, in the fluid flow direction after the second set of coils, i.e. the supply air side coils. This is the coldest point on the fluid side and by measuring the fluid temperature in this position, freezing of the liquid can be detected. A first natural step when freezing occurs in the liquid is to speed up the pump to increase fluid flow. Also other protection steps can be initiated if this is not enough, for example bypassing one or several coils to lower the energy exchange between the exhaust and supply.

For complementing the control possibilities and to monitor and control the fluid flow in the recovery circuit, a preferred embodiment comprises a fluid flow sensor, arranged preferably in position to measure the fluid flow in the recovery circuit. When for example the fluid starts to freeze, the pump speed is increased, from the optimal point for the actual condition, up to maximum speed if needed. By also monitoring the fluid flow in the recovery system the control of freezing protection and optimal energy recovery is balanced together with other options like bypassing one or several coils or set of coils etc. A flexible and controllable system for controlling energy recovery and protect the HE-RAR system from freezing is achieved.

According to a preferred embodiment of the invention a second fluid temperature sensor is arranged in the energy recovery system before the energy exchanger, which connects the energy recovery circuit with the supply circuit. The supply circuit adds external heating or cooling energy, depending of heating or cooling demand, from an external source via this energy exchanger. The second fluid temperature sensor measures the fluid temperature of the incoming fluid to the energy exchanger. To protect the supply circuit from freezing, the set point of the sensor initiates freezing protection similar with the steps initiated of the first fluid temperature sensor - adjust fluid flow, bypass one or several coils etc.

According to a preferred embodiment the system is "learning" which freezing setpoint to use on the liquid side. This is done by that the freezing setpoint of the first fluid temperature sensor is adjustable, and the system slowly can adjust this setpoint based on pressure drop measurements over the first coil in the first set of coils, by means of the differential pressure sensor, and by that "learn" which value to use. For example if the freezing setpoint from start is -5°C and the pressure drop over the first coil increases over a certain limit, the system adjusts the setpoint to -4°C. If the pressure drop is stable at the first setpoint (-5°C) the system adjusts the setpoint to -6°C. This activity must be over a longer period of time, from several hours up to days, before the system changes setpoint.

In the second aspect of the invention the object is solved by a method for freezing protection and continuous optimization of energy recovery of the run around coil system, comprising three sets of possible steps. Summarized the first set of steps comprises different measurements, the second set of steps comprises evaluation of the measurements and control of which steps in the third set of steps to perform, alone or in combination, and the third set of steps comprising possible actions/sequences to take to prevent frost formation and freezing, either on the exhaust air side or the liquid side of the system. More detailed the method is characterized by at first performing at least one of the following steps in the first set of steps of measurements namely: measure exhaust air temperature, measure exhaust air humidity, measure fluid temperature, measure fluid flow and measure air pressure drop over a coil in the exhaust air. In practice, all these measurements can be performed continuously, but for some applications not all measurements are wanted or needed and thereby the system might not be equipped with all these possibilities. A preferred embodiment of the inventive method includes measuring at least exhaust air temperature and humidity in one or several positions in the exhaust air stream, depending on the number of coils in the exhaust air set up, and also fluid temperature and fluid flow measurements in the energy recovery circuit.

Further the method is characterized to perform the second set of steps. In the second set of steps, the above described measurements are evaluated, and based on these values, the control system initiates one or several steps or sequences available in the third set of steps.

And further the method is characterized to perform at least one step in a third set of steps. Depending on the evaluation in the second set of steps and the programmed control sequences one or several of the following steps are available in the third set of steps namely: adjust the fluid flow in the energy recovery circuit; at least partial bypass of one or several coils in the second set of coils in the supply; at least partial bypass of the complete first set of coils; adjust freezing setpoint of the first fluid temperature sensor based on pressure drop measurement over the first coil in the first set of coils.

As an example of a possible sequence is when freezing is indicated by a temperature sensor in the liquid one possible first action is to increase liquid flow by speeding up the pump. If this is not enough, i.e. if the liquid temperature still exceeds the set point the second step can be to at least partially bypass the liquid to at least one of the coils in the supply air stream in a controlled manner. The number of coils can vary from two or more coils in the supply set of coils and if needed more coils can be bypassed. It is preferred to always keep one coil not bypassed to keep the energy efficiency at a reasonable level even during freezing protection operation. A further step if these actions are not enough can be to bypass or partially bypass the liquid the complete first set of coils, i.e. the coils in the exhaust air stream. Depending on air and fluid temperature measurements and fluid flow measurements in different positions of system it is possible to control and prevent freezing both on the air side and the liquid side. Together with that the system also has the possibility to control the total fluid flow circulation by a pump, the flexibility of the freezing protection sequence is better than prior art solutions. Further because of that running conditions changing over the year or by weather conditions and also because of activities in the building, which is supplied via the air handling unit equipped with HE-RAR system, the method uses actual values and acts after these to optimize energy recovery as well as protect the system from freezing, which makes it possible to use HE-RAR systems also in colder climate and with higher energy recovery than prior art solutions, which have a more basic and imprecise control.

In a preferred embodiment of the method when also the first set of coils, in the exhaust air stream, comprises at least two coils, the third set of steps further comprises the possible step of at least partial bypass of one or several coils in the first set of coils in the exhaust. This gives an even better flexibility to optimize the freezing protection and continuous optimizing of the energy recovery with possible balance and control of the two or more coils regards partial bypass at the same time as some energy can be maintained due to the control of energy recovery and freezing protection.

In a preferred embodiment of the invented method when also the first set of coils, in the exhaust air stream, comprises at least two coils, the third set of steps further comprises the possible step of control condensation in one of the coils in the first set of coils in the exhaust. To detect the humidity of the exhaust air and use this information to make sure that at least some of the exhaust air water content is condensed in for example the coil that first meet the exhaust airflow, gives better conditions for the following coils in the set, especially the coldest coil. The freezing risk in the coldest coil is lowered at the same time as this coil can be used even when the exhaust air is humid. Further the coil can recover energy down to lower temperatures compared to prior art systems.

By the invention a number of advantages compared to known solutions are obtained:
- Better total energy recovery with better and more flexible control possibilities than in prior art systems and the total energy recovery is better over a wider range of running conditions.
- By controlling the temperature and humidity in the exhaust air and react upon measured values one can gain high energy recovery despite humid air and down to lower temperatures compared to prior art solutions.
- Precise optimizations for keeping good energy recovery and at the same time protect the system from freezing on the air side and liquid side.

### Brief description of the drawings

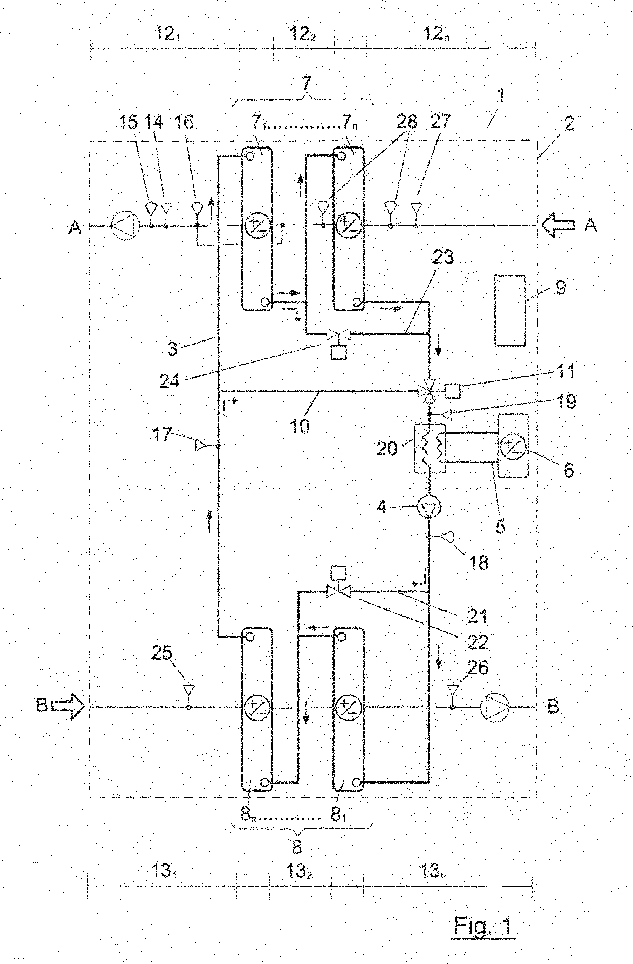

Fig 1 shows a preferred embodiment of the system. The figure gives an example with two coils in each set of coils but the invention is not limited to that number of coils in each set.

The constructive design by the present invention is obvious in the following description in detail of an example of embodiment of the invention related to the accompanying figure showing a preferred, but not limited example of embodiment of the invention. In addition the invention forwards the prior art in the field in different aspects. This is realized in the present invention by that the device of the below described art principally is constituted in a way that is obvious from the characterised part of claim 1 and 14.

### Detailed description of the drawing

**Fig 1** shows a preferred embodiment of the run around coil system 1, in connection to an air handling unit 2. The figure does not show any particular details of the air handling unit 2 because the configuration of it is not the issue, and the air handling unit 2 is thereby only symbolically shown as a dotted frame and a supply and exhaust fan. The air handling unit 2 comprises one exhaust air side A and one supply air side B. In the figure the exhaust air side A is positioned in the upper part of the air handling unit 2 and the supply air side B is positioned in the lower part. The run around coil system 1 further comprises an energy recovery circuit 3 which comprises a pump 4 for circulation of a fluid between coils 7₁,...7ₙ positioned in the exhaust air side A and coils 8₁,...8ₙ positioned in the supply air side B, and thereby recovers energy from one side to the other of the air handling unit 2. In a heating case heat is recovered from the exhaust air side A and transferred to the supply air side B via the energy recover circuit 3. Said run around coil system 1 is of a so called high-efficiency type which also comprises a supply circuit 5 which is connected to the energy recover circuit 3 via an energy exchanger 20. This supply circuit is also connected to an external heating or cooling source 6 which makes it possible to feed the energy recovery circuit 3 with additional heating or cooling energy. If the system comprises both additional heating and cooling the system comprises usually at least two energy exchangers 20. This kind of system is further described in the applicants patent EP 0706630 B1, and therefore not further described here.

In the preferred embodiment of the invention the run around coil system 1 comprises two sets of coils - one first set of coils 7 in the exhaust air stream A and one second set of coils 8 in the supply air stream B. Preferred is that each set comprises at least two coils or more for full flexibility. The first set of coils 7 (exhaust side) comprises two or more coils 7₁-7ₙ positioned in the exhaust air stream A, and the first coil 7₁ is positioned first in the set regards to fluid flow direction, which means that this coil 7₁ is the last coil in the exhaust air flow direction. The last coil 7ₙ in the first set of coils 7 is the last coil regards to fluid flow direction, which means that this coil 7ₙ is the first coil that meets the exhaust air flow.

The second set of coils 8 (supply side) comprises two or more coils 8₁-8ₙ positioned in the supply air stream B, and the first coil 8₁ is positioned first in the set regards to fluid flow direction, which means that this coil 8₁ is the last coil in the supply air flow direction. The last coil 8ₙ in the second set of coils 8 is the last coil in the set regards to fluid flow direction which means that this coil 8ₙ is the first coil that meets the supply air flow (outdoor air).

For inspection and cleaning purpose and also for positioning of sensors in the exhaust air flow, the first set of coils 7 is arranged with spaces 12₁-12ₙ positioned before, between and after the coils 7₁-7ₙ in the set. For the same reasons, in the supply air flow, the second set of coils 8 is arranged with spaces 13₁-13ₙ positioned before, between and after the coils 8₁-8ₙ in the set.

Now follows a description of the energy recovery circuit 3 in the fluid flow direction and starting from the pump 4. The fluid flows from the pump in direction towards the second set of coils 8 positioned in the supply air flow. The first coil 8₁ is possible to bypass (0-100%) on the fluid side by a first bypass circuit 21 which comprises an electronically controlled first two way valve 22. After passing or bypassing the first coil 8₁ the fluid enters the next coil 8_{2 ...} 8ₙ and the last coil 8ₙ in the set it is never bypassed. In this case the second set of coils 8 only comprises two coils but if there are more coils in the set, a similar bypass arrangement as for the first coil 8₁ can be arranged with the next coil 8₂ and so on. The fluid flow is measured by fluid flow sensor 18 connected to the circuit for example in a position before the second set of coils 8. A first fluid temperature sensor 17 is positioned after the second set of coils 8, which is the coldest point in the fluid system. After the fluid has passed the second set of coils and the coldest point in the system, at the first fluid temperature sensor 17, the fluid flows in direction to the first set of coils 7 which is positioned in the exhaust air stream. Before the first set of coils 7 a third bypass circuit 10 is positioned. The third bypass circuit 10 can bypass (0-100%) the complete first set of coils 7 and the bypass pipe connects before the first set of coils 7 with a pipe connection and a connects after the first set of coils 7 with an electronically controlled multi way valve 11. If the multi way valve 11 is closed or partially closed fluid flows to the first coil 7₁ in first set of coils 7. After this coil 7₁, the fluid either flows directly to the next coil 7₂ 7ₙ or bypasses the next coil 7_{2 ...} 7ₙ partially or fully, depending on the situation. The bypass is possible due to a second bypass circuit 23 with a second two way valve 24. If the first set of coils 7 comprises more than two coils a similar bypass arrangement gives the possibility to bypass (0-100%) also the next coil 7₃ and so on. After the first set of coils 7 the fluid flows to the multi way valve 11 and then further on to the energy exchanger 20, where the fluid can be loaded with external energy via the supply circuit 5 connected to the external energy source 6. The supply circuit 5 is only symbolically shown in this figure and not further discussed. Before the energy exchanger 20 a second fluid temperature sensor 19 is positioned to measure the temperature and by that give input to the controls to prevent the supply circuit 5 from freezing. After the energy exchanger 20 the energy recovery circuit 3 is closed by that the fluid reaches the pump 4. The number of energy exchangers 20 varies depending on if both external heating and cooling should be provided.

As described above the coils in each set are arranged with spaces 12_{1 ...} 12ₙ; 13_{1 ...} 13ₙ for possible sensor positioning. In almost every air handling unit applications the registration of outdoor temperature and supply air temperature is measured. In the figure the outdoor air temperature sensor 25 is positioned before incoming outdoor air reaches the second set of coils 8 and a supply air temperature sensor 26 is positioned after the second set of coils 8. In the exhaust air there is a possibility to put in sensors for air temperature, air humidity and pressure in all spaces 12_{1 ...} 12ₙ but not all applications will probably have the need of all these sensors. Below a number of measuring steps and function steps will be described and in connection to this also the position of different sensors, to control the freezing protection and the continuous optimization of the energy recovery during freezing protection.

For controlling the complete system - collecting sensor data, evaluate and initiate control sequences - a control unit 9 is connected to sensors and controllable apparatus. The symbolically wiring between this control unit 9 and sensors, valves, pump etc. has been left out to make the figure readable.

### 1. Preferred control method based on exhaust conditions

To prevent the system from freezing on the exhaust air side A the exhaust air conditions is measured. In this case a first air temperature sensor 14 and a first air humidity sensor 15 are positioned after the first set of coils 7 in the exhaust air, regards to exhaust air flow direction, i.e. after the coldest coil 7₁. If conditions exceed the conditions for freezing setpoint at this point:
- The first sequence is to increase the fluid flow from optimal fluid flow to maximum fluid flow by speeding up the pump 4. When maximum fluid flow and the conditions at the first air temperature sensor 14 and the first air humidity sensor 15 still exceed the set point, a second sequence starts.
- The second sequence is to open the first bypass circuit 21 for bypassing of the first coil 8₁ in the second set of coils 8 (in the supply) by that the first two way valve 22 opens, starting from 0 and up to 100% open, if needed. As told before the system can be equipped with more coils than two in the set, for example three coils 8₁-8₃, and when the first valve 22 is fully open and the first coil 8₁ is fully bypassed, and conditions at the sensors 14,15 still exceed the freezing set point, the next coil 8₂ starts to get bypassed. When the valve(s) 22 is fully open and the conditions still exceed the freezing set point, a third sequence starts.
- The third sequence is to either open the second bypass circuit 23 by opening the second two way valve 24 and start to bypass the last coil 7ₙ in the first set of coils 7 (in the exhaust) from 0-100% if needed or/and open the third bypass circuit 10 by opening the multi way valve 11 to set value.

### 2. Preferred control method based on fluid conditions

To prevent the fluid from freezing in the energy recovery circuit 3 the fluid temperature is measured in the coldest point in the system by the first fluid temperature sensor 17, positioned in the fluid flow direction after the second set of coils 8. If conditions exceed the conditions for fluid freezing setpoint:
- The first sequence is to increase the fluid flow from optimal fluid flow to maximum fluid flow by speeding up the pump 4. When maximum fluid flow and the conditions at the first fluid temperature sensor 17 still exceed the set point, a second sequence starts.
- The second sequence is to open the first bypass circuit 21 for bypassing or partial bypassing of the first coil 8₁ in the second set of coils 8 (in the supply) by that the first two way valve 22 opens. If the system is equipped with more coils than two in the set, for example three coils 8₁-8₃, and when the first valve 22 is fully open and the first coil 8₁ is fully bypassed, and conditions at the first fluid temperature sensor 17 still exceed the freezing set point, the next coil 8₂ starts to get bypassed. To retain a stable supply air temperature and to prevent other supply air coils from freezing the last coil 8ₙ is never bypassed.

### 3. Preferred control method based on fluid conditions before the energy exchanger

To prevent the supply energy circuit 5 from freezing the fluid temperature is measured before the energy exchanger 20 in connection to the supply circuit 5 for additional energy from the external source 6. This is done by the second fluid temperature sensor 19, positioned in the fluid flow direction after the multi way valve 11 and before the energy exchanger 20. If conditions at the fluid temperature sensor 19 exceed the conditions for the external energy source 6 fluid freezing setpoint:
- The sequences are equal to control method 1 above but based on the second fluid temperature sensor 19.

Another advantage not mentioned in the above preferred method steps, is that the use of multiple coils in the exhaust air flow, i.e. in the first set of coils 7, makes it possible to release a part of the exhaust air humidity by cooling in one or several coils 7₂-7ₙ. As the coils are split water can be condensed out from the exhaust air before it reaches the coldest coil 7₁. The exhaust air that reaches this coil 7₁ contains very low level of humidity and the freezing point is then much lower than with a single coil solution. Compared to single coil systems, full efficiency is maintained down to much lower temperatures, and practically 2-3 coils 7₁-7ₙ are suitable for targeted climate conditions. A possible option is to measure the conditions before and after the condensing coil/coils 7₂-7ₙ by the positioning of for example one second air temperature sensor 27 before this coil 7₂-7ₙ and one second air humidity sensor 28 before and/or after this coil 7₂-7ₙ. In that way the system can measure and evaluate how much water is taken out and also see the incoming air conditions to the coldest coil, and react on these measurements.

Another possible extra safety option is available if a differential pressure sensor 16 is positioned to measure pressure drop over the coldest exhaust air coil 7₁. An increase of the pressure drop over this coil is an indication of the formation of frost or ice in air flow. Although the explained control system will prevent any formation of ice or frost during normal operation, fast changing conditions, such as fast air flow changes could be responsible for this scenario. In that case, the control will trigger all three sequences 1+2+3 according to above to quickly melt the ice and restore the normal operating conditions as quick as possible.

The pressure drop over the coldest coil 7₁, measured with the differential pressure sensor 16, can also be used to adjust the freezing setpoint of the first fluid temperature sensor 17 if applicable. An increase of pressure drop over this coil for a long period of time will increase the setpoint, for example from -5°C to -4°C. If no pressure drop the setpoint can be lowered, for example from -5°C to -6°C. This is a kind of "learning sequence" for the system to learn which setpoint to use.

According to the invention each coil in the first and the second set of coils is individually optimized for its purpose. This means that depending on the design criteria, certain demands on the system control etc., each coil in is designed for the best functionality in respect of freezing protection and for continuous energy optimization during this operation, which means that the coils is individually designed with possible different set up of piping, fin spacing, dimensions - for example width, material, etc. compared to other coils in the set. This is not visible in the figure but the advantages follow with the flexibility of the above described functionality and control options available.

It is understood that the above described preferred embodiment of the invention and the above described control method is one example of how to design and control the freezing protection regards to optimized running performance. The inventive system and method are defined in the claims.

### PARTS LIST

1 = run around coil system
2 = air handling unit
3 = energy recovery circuit
4 = pump
5 = supply circuit
6 = external energy source
7 = first set of coils
7₁-7ₙ = coils of the first set
8 = second set of coils
8₁-8ₙ = coils of the first set
9 = control unit
10 = third bypass circuit
11 = multi way valve
12 = space (in the first set of coils)
13 = space (in the second set of coils)
14 = first air temperature sensor
15 = first air humidity sensor
16 = differential pressure sensor
17 = first fluid temperature sensor
18 = fluid flow sensor
19 = second fluid temperature sensor
20 = energy exchanger
21 = first bypass circuit
22 = first two way valve
23 = second bypass circuit
24 = second two way valve
25 = outdoor air temperature sensor
26 = supply air temperature sensor
27 = second air temperature sensor
28 = second air humidity sensor
A = exhaust air side
B = supply air side

## Claims

1. System for freezing protection and continuous optimization of energy recovery of a run around coil system (1) in connection to an air handling unit (2), said air handling unit (2) comprises one exhaust air side (A) and one supply air side (B), and said run around coil system (1) comprises an energy recovery circuit (3) with at least one pump (4) for circulation of a fluid, and said run around coil system (1) further comprises at least one supply circuit (5) for supplying additional heating or cooling energy from an external heating or cooling source (6) and the supply circuit (5) is connected to the energy recovery circuit (3) via at least one energy exchanger (20), and the system is arranged to adjust the fluid flow in the energy recovery circuit (3), and the system further comprises at least one first set of coils (7) in the exhaust air side (A), and at least one second set of coils (8) in the supply air side (B), and at least the second set of coils (8) comprising at least two coils (8₁,...8ₙ) arranged in the same air stream, and said run around coil system (1) further comprises a control unit (9) for controlling freezing protection and for continuous optimization of energy recovery of the system, the system having a supply air flow direction being opposite the direction of the circulation of the fluid flow on the supply air side (B), such that the last coil (8ₙ) in the second set of coils (8) is the last coil in the set regards to the direction of the fluid flow such that said coil (8ₙ) is the first coil meeting the supply air flow, **characterized by** that at least one coil (8₁,...8ₙ) in the second set of coils (8) is arranged to be partially bypassed, on the fluid side, and the first coil (8ₙ) in the supply airflow direction is arranged to not be bypassed, on the fluid side.

2. System according to claim 1, **characterized by** that each coil (8₁,...8ₙ) in the second set of coils (8) is individually optimized for its purpose, i.e. regards to piping, fin spacing, dimensions and material.

3. System according to claim 1 or 2, **characterized by** that the first set of coils (7) comprising at least two coils (7₁,...7ₙ) arranged in the same air stream, and that at least one coil (7₁,...7ₙ) in the first set of coils (7) is arranged to be partially bypassed on the fluid side.

4. System according to claim 3, **characterized by** that at least one coil (7₁,...7ₙ) is arranged to not be bypassed, on the fluid side.

5. System according to claim 3 or 4, **characterized by** that each coil (7₁,...7ₙ) in the first set of coils (7) is individually optimized for its purpose, i.e. regards to piping, fin spacing, dimensions and material.

6. System according to any of the preceding claims, **characterized by** the first set of coils (7) is arranged to be partially bypassed, on the fluid side.

7. System according to any of the preceding claims, **characterized by** that the coils (7₁,...7ₙ; 8₁,...8ₙ) in at least one of said first or second set of coils (7, 8) are on the air side arranged with a space (12₁,...12ₙ; 13₁,...13ₙ) before, between and after the coils (7₁,...7ₙ; 8₁,...8ₙ).

8. System according to claim 7, **characterized by** that at least one of said spaces (12₁,...12ₙ; 13₁,...13ₙ) comprises an air temperature sensor (14, 27).

9. System according to any of the claims 7 - 8, **characterized by** that at least one of said spaces (12₁,...12ₙ; 13₁,...13ₙ) comprises an air humidity sensor (15, 28).

10. System according to any of the claims 7 - 9, **characterized by** that at least one of said spaces (12₁,...12ₙ; 13₁,...13ₙ) comprises a differential pressure sensor (16).

11. System according to any of the preceding claims, **characterized by** that a first fluid temperature sensor (17) is placed in the energy recovery circuit (3), in the fluid flow direction after the second set of coils (8).

12. System according to any of the preceding claims, **characterized by** that a fluid flow sensor (18) is placed in the energy recovery circuit (3), for measuring the fluid flow in energy recovery circuit (3).

13. System according to any of the preceding claims, **characterized by** that a second fluid temperature sensor (19) is placed in the energy recovery circuit (3), in the fluid flow direction before the energy exchanger (20).

14. System according to claim 10 and 11, **characterized by** that the freezing setpoint of the fluid temperature sensor (17) is adjustable and depending on pressure drop measurement over the first coil (7₁) in the first set of coils (7), by means of the differential pressure sensor (16).

15. Method for freezing protection and continuous optimization of energy recovery of a run around coil system (1) in connection to an air handling unit (2), said air handling unit (2) comprises one exhaust air side (A) and one supply air side (B), and said run around coil system (1) comprises an energy recovery circuit (3) with at least one pump (4) for circulation of a fluid, and said run around coil system (1) further comprises at least one supply circuit (5) for supplying additional heating or cooling energy from an external heating or cooling source (6) and the supply circuit (5) is connected to the energy recovery circuit (3) via at least one energy exchanger (20), and the run around coil system (1) further comprises at least one first set of coils (7) in the exhaust air side (A), and at least one second set of coils (8) in the supply air side (B), and at least the second set of coils (8) comprising at least two coils (8₁,...8ₙ) arranged in the same air stream, and said run around coil system (1) further comprises a control unit (9) for controlling freezing protection and for continuous optimization of energy recovery of the system, the system having a supply air flow direction being opposite the direction of the circulation of the fluid flow on the supply air side (B), such that the last coil (8ₙ) in the second set of coils (8) is the last coil in the set regards to the direction of the fluid flow such that said coil (8ₙ) is the first coil meeting the supply air flow, **characterized by** the following steps:
perform at least one step in a first set of steps comprising:
- measuring temperature of the exhaust air by means of at least one air temperature sensor (14, 27) placed in at least one space (12₁,...12ₙ) before, and/or between and/or after the coil/coils (7₁,...7ₙ) in the first set of coils (7),
- measuring humidity of the exhaust air by means of at least one air humidity sensor (15, 28) placed in at least one space (12₁,...12ₙ) before, and/or between and/or after the coil/coils (7₁,...7ₙ) in the first set of coils (7),
- measure fluid temperature by means of a first fluid temperature sensor (17) placed in the energy recovery circuit (3), in the fluid flow direction after the second set of coils (8),
- measure fluid flow by means of a fluid flow sensor (18) placed in the energy recovery circuit (3),
- measure fluid temperature by means of a second fluid temperature sensor (19) placed in the energy recovery circuit (3), in the fluid flow direction before the energy exchanger (20),
- measure differential air pressure drop over the first coil (7₁) in the first set of coils (7), by means of a differential pressure sensor (16), to detect frost formation in the first coil (7₁),
perform a second set of steps comprising:
- evaluate the measured data from the first set of steps,
- on the basis of the evaluation data, control which of the steps, in a third set of steps, to perform alone or in combination, to prevent freezing and frost formation and for continuous optimization of energy recovery:
perform at least one step in the third set of steps comprising:
- adjust the fluid flow in the energy recovery circuit (3), to keep the fluid temperature above a defined temperature,
- at least partial bypass, on the fluid side, of at least one coil (8₁,...8ₙ) in the second set of coils (8), and always not bypass the first coil (8ₙ) in the supply air flow direction,
- at least partial bypass the first set of coils (7), on the fluid side,
- adjust freezing setpoint of the first fluid temperature sensor (17) based on pressure drop measurement over the first coil (7₁) in the first set of coils (7), by means of the differential pressure sensor (16).

16. Method according to claim 15, **characterized by** that when the first set of coils (7) comprising at least two coils (7₁,...7ₙ) arranged in the same air stream, the third set of steps further comprising:
- at least partial bypass, on the fluid side, of at least one coil (7₁,...7ₙ) in the first set of coils (7).

17. Method according to claim 15 or 16, **characterized by** that when the first set of coils (7) comprising at least two coils (7₁,...7ₙ) arranged in the same air stream, the third set of steps further comprising:
- condensate at least a part of the exhaust air humidity by cooling at least at one coil (7₁,...7ₙ) in the first set of coils (7), by regulating the fluid flow to this coil.

## Patentansprüche

1. System zum Frostschutz und zur kontinuierlichen Optimierung einer Energierückgewinnung eines Kreislaufverbundsystems (1) in Verbindung mit einem Lüftungsgerät (2), wobei das Lüftungsgerät (2) eine Abluftseite (A) und eine Zuluftseite (B) aufweist und das Kreislaufverbundsystem (1) einen Energierückgewinnungskreislauf (3) mit mindestens einer Pumpe (4) zur Zirkulation eines Fluids aufweist, und wobei das Kreislaufverbundsystem (1) ferner mindestens einen Versorgungskreislauf (5) zur Zufuhr zusätzlicher Heiz- oder Kühlenergie von einer externen Heiz- oder Kühlquelle (6) aufweist und der Versorgungskreislauf (5) mit dem Energierückgewinnungskreislauf (3) über mindestens einen Energietauscher (20) verbunden ist, und das System dazu eingerichtet ist, den Fluidstrom in dem Energierückgewinnungskreislauf (3) anzupassen, und das System ferner mindestens einen ersten Satz von Rohrschlangen (7) auf der Abluftseite (A) und mindestens einen zweiten Satz von Rohrschlangen (8) auf der Zuluftseite (B) aufweist, und zumindest der zweite Satz von Rohrschlangen (8) mindestens zwei Rohrschlangen (8₁,...8ₙ) aufweist, die in demselben Luftstrom angeordnet sind, und das Kreislaufverbundsystem (1) ferner eine Steuereinheit (9) zur Steuerung des Frostschutzes und zur kontinuierlichen Optimierung der Energierückgewinnung des Systems aufweist, wobei das System eine Zuluftstromrichtung aufweist, die der Richtung der Zirkulation des Fluidstroms auf der Zuluftseite (B) entgegengesetzt ist, so dass die letzte Rohrschlange (8ₙ) in dem zweiten Satz von Rohrschlangen (8) die letzte Rohrschlange in dem Satz in Bezug auf die Richtung des Fluidstroms ist, so dass diese Rohrschlange (8ₙ) die erste Rohrschlange ist, die auf den Zuluftstrom trifft, **dadurch gekennzeichnet, dass** mindestens eine Rohrschlange (8₁ ,....8ₙ ) in dem zweiten Satz von Rohrschlangen (8) so angeordnet ist, dass sie auf der Fluidseite teilweise umgangen wird, und die erste Rohrschlange (8ₙ) in der Zuluftstromrichtung so angeordnet ist, dass sie auf der Fluidseite nicht umgangen wird.

2. System nach Anspruch 1, **dadurch gekennzeichnet, dass** jede Rohrschlange (8₁ ,...8ₙ) in dem zweiten Satz von Rohrschlangen (8) individuell für ihren Zweck optimiert ist, d.h. hinsichtlich Verrohrung, Lamellenabstand, Abmessungen und Material.

3. System nach Anspruch 1 oder 2, **dadurch gekennzeichnet, dass** der erste Satz von Rohrschlangen (7) mindestens zwei Rohrschlangen (7₁ ,...7ₙ) aufweist, die in demselben Luftstrom angeordnet sind, und dass mindestens eine Rohrschlange (7₁ ,...7ₙ ) in dem ersten Satz von Rohrschlangen (7) so angeordnet ist, dass sie auf der Fluidseite teilweise umgangen wird.

4. System nach Anspruch 3, **dadurch gekennzeichnet, dass** mindestens eine Rohrschlange (7₁ ,...7ₙ) so angeordnet ist, dass sie auf der Fluidseite nicht umgangen wird.

5. System nach Anspruch 3 oder 4, **dadurch gekennzeichnet, dass** jede Rohrschlange (7₁ ,...7ₙ) in dem ersten Satz von Rohrschlangen (7) individuell für ihren Zweck optimiert ist, d.h. hinsichtlich Verrohrung, Lamellenabstand, Abmessungen und Material.

6. System nach einem der vorhergehenden Ansprüche, **dadurch gekennzeichnet, dass** der erste Satz von Rohrschlangen (7) so angeordnet ist, dass er auf der Fluidseite teilweise umgangen wird.

7. System nach einem der vorhergehenden Ansprüche, **dadurch gekennzeichnet, dass** die Rohrschlangen (7₁ ,...7ₙ ; 8₁ ,...8ₙ) in zumindest einem des ersten oder zweiten Satzes von Rohrschlangen (7, 8) auf der Luftseite mit einem Zwischenraum (12₁ ,...12ₙ ; 13₁ ,...13ₙ) vor, zwischen und nach den Rohrschlangen (7₁ ,...7ₙ ; 8₁ ,...8ₙ) angeordnet sind.

8. System nach Anspruch 7, **dadurch gekennzeichnet, dass** mindestens einer der genannten Zwischenräume (12₁ ,...12ₙ ; 13₁ ,...13ₙ) einen Lufttemperatursensor (14, 27) aufweist

9. System nach einem der Ansprüche 7 bis 8, **dadurch gekennzeichnet, dass** mindestens einer der Zwischenräume [12₁ ,...12ₙ ; 13₁ ,...13ₙ) einen Luftfeuchtigkeitssensor (15, 28) aufweist.

10. System nach einem der Ansprüche 7 bis 9, **dadurch gekennzeichnet, dass** mindestens einer der Zwischenräume [12₁ ,...12ₙ; 13₁ ,...13ₙ) einen Differenzdrucksensor (16) aufweist.

11. System nach einem der vorhergehenden Ansprüche, **dadurch gekennzeichnet, dass** ein erster Fluidtemperatursensor (17) in dem Energierückgewinnungskreislauf (3) in der Fluidstromrichtung hinter dem zweiten Satz von Rohrschlangen (8) angeordnet ist.

12. System nach einem der vorhergehenden Ansprüche, **dadurch gekennzeichnet, dass** ein Fluidstromsensor (18) in dem Energierückgewinnungskreislauf (3) angeordnet ist, um den Fluidstrom in dem Energierückgewinnungskreislauf (3) zu messen.

13. System nach einem der vorhergehenden Ansprüche, **dadurch gekennzeichnet, dass** ein zweiter Fluidtemperatursensor (19) in dem Energierückgewinnungskreislauf (3) in der Fluidstromrichtung vor dem Energietauscher (20) angeordnet ist.

14. System nach Anspruch 10 und 11, **dadurch gekennzeichnet, dass** der Gefriersollwert des Fluidtemperatursensors (17) einstellbar und abhängig von einer Druckabfallmessung über der ersten Rohrschlange (7₁) in dem ersten Satz von Rohrschlangen (7) mittels des Differenzdrucksensors (16) ist

15. Verfahren zum Frostschutz und zur kontinuierlichen Optimierung einer Energierückgewinnung eines Kreislaufverbundsystems (1) in Verbindung mit einem Lüftungsgerät (2), wobei das Lüftungsgerät (2) eine Abluftseite (A) und eine Zuluftseite (B) aufweist, und das Kreislaufverbundsystems (1) einen Energierückgewinnungskreislauf (3) mit mindestens einer Pumpe (4) zur Zirkulation eines Fluids aufweist, und wobei das Kreislaufverbundsystems (1) ferner mindestens einen Versorgungskreislauf (5) zur Zufuhr zusätzlicher Heiz- oder Kühlenergie von einer externen Heiz- oder Kühlquelle (6) aufweist und der Versorgungskreislauf (5) mit dem Energierückgewinnungskreislauf (3) über mindestens einen Energietauscher (20) verbunden ist, und das Kreislaufverbundsystem (1) ferner mindestens einen ersten Satz von Rohrschlangen (7) auf der Abluftseite (A) und mindestens einen zweiten Satz von Rohrschlangen (8) auf der Zuluftseite (B) aufweist, und zumindest der zweite Satz von Rohrschlangen (8) mindestens zwei Rohrschlangen (8₁ ,....8ₙ) aufweist, die in demselben Luftstrom angeordnet sind, und das Kreislaufverbundsystem (1) ferner eine Steuereinheit (9) zur Steuerung des Frostschutzes und zur kontinuierlichen Optimierung der Energierückgewinnung des Systems aufweist, wobei das System eine Zuluftstromrichtung aufweist, die der Richtung der Zirkulation des Fluidstroms auf der Zuluftseite (B) entgegengesetzt ist, so dass die letzte Rohrschlange (8ₙ) in dem zweiten Satz von Rohrschlangen (8) die letzte Rohrschlange in dem Satz in Bezug auf die Richtung des Fluidstroms ist, so dass diese Rohrschlange (8ₙ) die erste Rohrschlange ist, die auf den Zuluftstrom trifft, **gekennzeichnet durch** die folgenden Schritte:
Durchführen mindestens eines Schritts eines ersten Satzes von Schritten, aufweisend:
- Messen einer Temperatur der Abluft mittels mindestens eines Lufttemperatursensors (14, 27), der in mindestens einem Zwischenraum [12₁ ,...12ₙ) vor und/oder zwischen und/oder nach der/den Rohrschlange(n) (7₁,...7ₙ) in dem ersten Satz von Rohrschlangen (7) angeordnet ist,
- Messen einer Feuchtigkeit der Abluft mittels mindestens eines Luftfeuchtigkeitssensors (15, 28), der in mindestens einem Zwischenraum [12₁ ,...12ₙ) vor und/oder zwischen und/oder nach der/den Rohrschlange(n) (7₁,...7ₙ) in dem ersten Satz von Rohrschlangen (7) angeordnet ist,
- Messen einer Fluidtemperatur mittels eines ersten Fluidtemperatursensors (17), der in dem Energierückgewinnungskreislauf (3) in der Fluidstromrichtung nach dem zweiten Satz von Rohrschlangen (8) angeordnet ist,
- Messen eines Fluidstroms mit einem Fluidstromsensor (18), der in dem Energierückgewinnungskreislauf (3) angeordnet ist,
- Messen einer Fluidtemperatur mittels eines zweiten Fluidtemperatursensors (19), der in dem Energierückgewinnungskreislauf (3) in der Fluidstromrichtung vor dem Energietauscher (20) angeordnet ist,
- Messen eines Differenzluftdruckabfalls über die erste Rohrschlange (7₁) in dem ersten Satz von Rohrschlangen (7) mittels eines Differenzdrucksensors (16), um Frostbildung in der ersten Rohrschlange (7₁) zu detektieren,
Durchführen eines zweiten Satzes von Schritten, aufweisend:
- Auswerten der Messdaten aus dem ersten Satz von Schritten,
- Steuern auf der Grundlage der Auswertungsdaten, welche der Schritte in einer dritten einem dritten Satt von Schritten allein oder in Kombination durchgeführt werden sollen, um Gefrieren und Frostbildung zu verhindern und zur kontinuierlichen Optimierung der Energierückgewinnung:
Durchführen mindestens eines Schritts in dem dritten Satz von Schritten, aufweisend:
- Anpassen des Fluidstroms in dem Energierückgewinnungskreislauf (3), um die Fluidtemperatur über einer definierten Temperatur zu halten,
- Zumindest teilweise Umgehen mindestens einer Rohrschlange (8₁ ,...8ₙ) des zweiten Satzes von Rohrschlangen (8) auf der Fluidseite und niemals Umgehen der erste Rohrschlange (8ₙ) in der Zuluftstromrichtung,
- Zumindest teilweise Umgehen des ersten Satzes von Rohrschlangen (7) auf der Fluidseite,
- Anpassen des Gefriersollwerts des ersten Flüssigkeitstemperatursensors (17) auf der Grundlage einer Druckabfallmessung über die erste Rohrschlange (7₁) in dem ersten Satz von Rohrschlangen (7) mittels des Differenzdrucksensors (16).

16. Verfahren nach Anspruch 15, **dadurch gekennzeichnet, dass**, wenn der erste Satz von Rohrschlangen (7) mindestens zwei Rohrschlangen (7₁ ,...7ₙ ) aufweist, die in demselben Luftstrom angeordnet sind, der dritte Satz von Schritten ferner aufweist:
- Zumindest teilweise Umgehen von mindestens einer Rohrschlange (7₁ ,...7ₙ ) in dem ersten Satz von Rohrschlangen (7) auf der Flüssigkeitsseite.

17. Verfahren nach Anspruch 15 oder 16, **dadurch gekennzeichnet, dass**, wenn der erste Satz von Rohrschlangen (7) mindestens zwei Rohrschlangen (7₁ ,...7ₙ ) aufweist, die in demselben Luftstrom angeordnet sind, der dritte Satz von Schritten ferner aufweist:
- Kondensieren zumindest eines Teils der Abluftfeuchtigkeit durch Kühlen mindestens einer Rohrschlange (7₁,...7ₙ ) in dem ersten Satz von Rohrschlangen (7) durch Regeln des Fluidstroms zu dieser Rohrschlange.

## Revendications

1. Système pour la protection contre le gel et l'optimisation continue de la récupération d'énergie d'un système de serpentin à circulation (1) en liaison avec une unité de traitement d'air (2), dans lequel ladite unité de traitement d'air (2) comprend un côté air extrait (A) et un côté air entrant (B), et ledit système de serpentin à circulation (1) comprend un circuit de récupération d'énergie (3) avec au moins une pompe (4) pour la circulation d'un fluide, et ledit système de serpentin à circulation (1) comprend en outre au moins un circuit d'alimentation (5) pour fournir une énergie de chauffage ou de refroidissement supplémentaire à partir d'une source de chauffage ou de refroidissement externe (6) et le circuit d'alimentation (5) est relié au circuit de récupération d'énergie (3) par l'intermédiaire d'au moins un échangeur d'énergie (20), et le système est agencé pour régler le débit du fluide dans le circuit de récupération d'énergie (3), et le système comprend en outre au moins un premier ensemble de serpentins (7) du côté air extrait (A), et au moins un deuxième ensemble de serpentins (8) du côté air entrant (B), et au moins le deuxième ensemble de serpentins (8) comprenant au moins deux serpentins (8₁, ... 8ₙ) disposés dans le même flux d'air, et ledit système de serpentin à circulation (1) comprend en outre une unité de commande (9) pour commander la protection contre le gel et pour l'optimisation continue de la récupération d'énergie du système, le système ayant une direction du flux d'air entrant qui est opposée à la direction de la circulation du flux du fluide du côté de l'air entrant (B), de sorte que le dernier serpentin (8n) dans le deuxième ensemble de serpentins (8) est le dernier serpentin de l'ensemble par rapport à la direction du flux de fluide de sorte que ledit serpentin (8ₙ) est le premier serpentin rencontrant le flux d'air entrant, **caractérisé en ce qu'**au moins un serpentin (8₁, .... 8ₙ) dans le second ensemble de serpentins (8) est agencé pour être partiellement contourné, du côté du fluide, et le premier serpentin (8ₙ) dans la direction du flux d'air entrant est agencé pour ne pas être contourné, du côté du fluide.

2. Système selon la revendication 1, **caractérisé en ce que** chaque serpentin (8₁, ... 8ₙ) dans le deuxième ensemble de serpentins (8) est optimisé individuellement pour son utilisation, c'est-à-dire en ce qui concerne sa tuyauterie, l'espacement de ses ailettes, ses dimensions et son matériau.

3. Système selon la revendication 1 ou 2, **caractérisé en ce que** le premier ensemble de serpentins (7) comprend au moins deux serpentins (7₁, ... 7ₙ) disposés dans le même flux d'air, et **en ce qu'**au moins un serpentin (7₁, ... 7ₙ) dans le premier ensemble de serpentins (7) est agencé pour être partiellement contourné du côté du fluide.

4. Système selon la revendication 3, **caractérisé en ce qu'**au moins un serpentin (7₁, ... 7ₙ) est agencé pour ne pas être contourné, du côté du fluide.

5. Système selon la revendication 3 ou 4, **caractérisé en ce que** chaque serpentin (7₁, ... 7ₙ) du premier ensemble de serpentins (7) est optimisé individuellement pour son utilisation, c'est-à-dire en ce qui concerne sa tuyauterie, l'espacement de ses ailettes, ses dimensions et son matériau.

6. Système selon l'une quelconque des revendications précédentes, **caractérisé en ce que** le premier ensemble de serpentins (7) est agencé pour être partiellement contourné, du côté du fluide.

7. Système selon l'une quelconque des revendications précédentes, **caractérisé en ce que** les serpentins (7₁, ... 7ₙ ; 8₁, ... 8ₙ) d'au moins l'un desdits premier ou deuxième ensembles de serpentins (7, 8) sont côté air agencés avec un espace (12₁, ... 12ₙ ; 13₁, ... 13ₙ) avant, entre et après les serpentins (7₁, ... 7ₙ ; 8₁, ... 8ₙ).

8. Système selon la revendication 7, **caractérisé en ce qu'**au moins l'un desdits espaces (12₁, ... 12ₙ ; 13₁, ... 13ₙ) comprend un capteur de température d'air (14, 27).

9. Système selon l'une quelconque des revendications 7 - 8, **caractérisé en ce qu'**au moins l'un desdits espaces (12₁, ... 12ₙ ; 13₁, ... 13ₙ) comprend un capteur d'humidité de l'air (15, 28).

10. Système selon l'une quelconque des revendications 7 - 9, **caractérisé en ce qu'**au moins l'un desdits espaces (12₁, ... 12ₙ ; 13₁, ... 13ₙ) comprend un capteur de pression différentielle (16).

11. Système selon l'une quelconque des revendications précédentes, **caractérisé en ce qu'**un premier capteur de température de fluide (17) est placé dans le circuit de récupération d'énergie (3), dans le sens de circulation du fluide après le deuxième ensemble de serpentins (8).

12. Système selon l'une quelconque des revendications précédentes, **caractérisé en ce qu'**un capteur de débit de fluide (18) est placé dans le circuit de récupération d'énergie (3), pour mesurer le débit du fluide dans le circuit de récupération d'énergie (3).

13. Système selon l'une quelconque des revendications précédentes, **caractérisé en ce qu'**un deuxième capteur de température de fluide (19) est placé dans le circuit de récupération d'énergie (3), dans le sens de circulation du fluide avant l'échangeur d'énergie (20).

14. Système selon les revendications 10 et 11, **caractérisé en ce que** le point de consigne du gel fixé pour le capteur de température de fluide (17) est réglable et est fonction de la mesure de la chute de pression sur le premier serpentin (7₁) du premier ensemble de serpentins (7), au moyen du capteur de pression différentielle (16).

15. Procédé pour la protection contre le gel et l'optimisation continue de la récupération d'énergie d'un système de serpentin à circulation (1) en liaison avec une unité de traitement d'air (2), dans lequel ladite unité de traitement d'air (2) comprend un côté air extrait (A) et un côté air entrant (B), et ledit système de serpentin à circulation (1) comprend un circuit de récupération d'énergie (3) avec au moins une pompe (4) pour la circulation d'un fluide, et ledit système de serpentin à circulation (1) comprend en outre au moins un circuit d'alimentation (5) pour fournir une énergie de chauffage ou de refroidissement supplémentaire à partir d'une source de chauffage ou de refroidissement externe (6) et le circuit d'alimentation (5) est relié au circuit de récupération d'énergie (3) par l'intermédiaire d'au moins un échangeur d'énergie (20), et le système de serpentin à circulation (1) comprend en outre au moins un premier ensemble de serpentins (7) du côté air extrait (A), et au moins un deuxième ensemble de serpentins (8) du côté air entrant (B), et au moins le deuxième ensemble de serpentins (8) comprenant au moins deux serpentins (8₁, .. 8ₙ) disposés dans le même flux d'air, et ledit système de serpentin à circulation (1) comprend en outre une unité de commande (9) pour commander la protection contre le gel et pour l'optimisation continue de la récupération d'énergie du système, le système ayant une direction du flux d'air entrant qui est opposée à la direction de la circulation du flux du fluide du côté de l'air entrant (B), de sorte que le dernier serpentin (8ₙ) dans le deuxième ensemble de serpentins (8) est le dernier serpentin de l'ensemble par rapport à la direction du flux du fluide de sorte que ledit serpentin (8ₙ) est le premier serpentin rencontrant le flux d'air entrant, **caractérisé par** les étapes suivantes :
réaliser au moins une étape dans un premier ensemble d'étapes comprenant :
- la mesure de la température de l'air extrait au moyen d'au moins un capteur de température d'air (14, 27) placé dans au moins un espace (12₁, ... 12ₙ) avant, et/ou entre, et/ou après le ou les serpentins. (7₁, ... 7ₙ) dans le premier ensemble de serpentins (7),
- la mesure de l'humidité de l'air extrait au moyen d'au moins un capteur d'humidité de l'air (15, 28) placé dans au moins un espace (12₁, ... 12ₙ) avant, et/ou entre, et/ou après le ou les serpentins (7₁, ... 7ₙ) dans le premier ensemble de serpentins (7),
- la mesure de la température du fluide au moyen d'un premier capteur de température de fluide (17) placé dans le circuit de récupération d'énergie (3), dans la direction du flux du fluide après le deuxième ensemble de serpentins (8),
- la mesure du débit du fluide au moyen d'un capteur de débit de fluide (18) placé dans le circuit de récupération d'énergie (3),
- la mesure de la température du fluide au moyen d'un deuxième capteur de température de fluide (19) placé dans le circuit de récupération d'énergie (3), dans la direction du flux du fluide avant l'échangeur d'énergie (20),
- la mesure de la chute de pression d'air différentielle sur le premier serpentin (7₁) dans le premier ensemble de serpentins (7), au moyen d'un capteur de pression différentielle (16), pour détecter la formation de givre dans le premier serpentin (7₁),
réaliser un deuxième ensemble d'étapes comprenant :
- l'évaluation des données mesurées à partir du premier ensemble d'étapes,
- sur la base des données d'évaluation, la mise en œuvre de celle des étapes, dans un troisième ensemble d'étapes, à réaliser seule ou en combinaison, pour empêcher le gel et la formation de givre et pour une optimisation continue de la récupération d'énergie,
réaliser au moins une étape dans le troisième ensemble d'étapes comprenant :
- le réglage du débit de fluide dans le circuit de récupération d'énergie (3), pour maintenir la température du fluide au-dessus d'une température définie,
- le contournement au moins partiel, du côté du fluide, d'au moins un serpentin (8₁ , ... 8ₙ) dans le deuxième ensemble de serpentins (8), et toujours en évitant de ne pas contourner le premier serpentin (8ₙ) dans la direction du flux d'air entrant,
- le contournement au moins partiel du premier ensemble de serpentins (7), du côté du fluide,
- le réglage du point de consigne du gel du premier capteur de température de fluide (17) sur la base de la mesure de la chute de pression sur le premier serpentin (7₁) dans le premier ensemble de serpentins (7), au moyen du capteur de pression différentielle (16).

16. Procédé selon la revendication 15, **caractérisé en ce que**, lorsque le premier ensemble de serpentins (7) comprend au moins deux serpentins (7₁, ... 7ₙ) disposés dans le même flux d'air, le troisième ensemble d'étapes comprend en outre :
- le contournement au moins partiel, du côté du fluide, d'au moins un serpentin (7₁, ... 7ₙ) du premier ensemble de serpentins (7).

17. Procédé selon la revendication 15 ou 16, **caractérisé en ce que**, lorsque le premier ensemble de serpentins (7) comprend au moins deux serpentins (7₁, ... 7ₙ) disposés dans le même flux d'air, le troisième ensemble d'étapes comprend en outre :
- la condensation d'au moins une partie de l'humidité de l'air extrait en refroidissant au moins un serpentin (7₁, ... 7ₙ) dans le premier ensemble de serpentins (7), en régulant le flux du fluide vers ce serpentin.
